# EUROPÄISCHE PATENTSCHRIFT

(11) **EP 1 144 076 B1**
(45) Veröffentlichungstag und Bekanntmachung des Hinweises auf die Patenterteilung: **31.03.2004**
(21) Anmeldenummer: 99963384.5
(22) Anmeldetag: 03.12.1999
(51) Int. Cl.: B01D 39/20, B32B 18/00

(54) **KERAMISCHE MEHRSCHICHTENFILTER UND VERFAHREN ZU DEREN HERSTELLUNG**
CERAMIC MULTILAYER FILTERS AND METHOD FOR PRODUCING THE SAME
FILTRES MULTICOUCHES CERAMIQUE ET LEUR PROCEDE DE PRODUCTION

(30) Priorität: 14.12.1998 DE 19857591
(43) Veröffentlichungstag der Anmeldung: 17.10.2001
(73) Patentinhaber: Fraunhofer-Gesellschaft zur Förderung der angewandten Forschung e.V., 80686 München (DE)
(72) Erfinder: ADLER, Jörg, D-01662 Meissen (DE); LENK, Reinhard, D-02779 Grosschönau (DE); RICHTER, Hans-Jürgen, D-01257 Dresden (DE)
(74) Vertreter: Rauschenbach, Marion, Dipl.-Ing.
(86) Internationale Anmeldenummer: PCT/EP1999/009479
(87) Internationale Veröffentlichungsnummer: WO 2000/035558

(56) Entgegenhaltungen:
- DE-A- 19 512 146
- US-A- 5 780 126

## Beschreibung

Die Erfindung bezieht sich auf das Gebiet der Filtertechnik und der Keramik und betrifft keramische Mehrschichtfilter und ein Verfahren zu deren Herstellung, wie sie beispielsweise zur Trennung von Öl-Wasser-Emulsionen bei der spanabhebenden Fertigung, zur Klärung von Bier, zur Gasreinigung, zur Gastrennung oder zur Trennung von Flüssig-Feststoff-Gemischen eingesetzt werden können.

Trotz der kommerziellen Erfolge der keramischen UF/MF-Membranen in den letzten Jahren und der weiterhin steigenden Nachfrage ist ein wesentlicher Nachteil gegenüber den sehr viel weiter verbreiteten Polymer-Membranen geblieben: der relativ hohe Preis pro Filterfläche.

Keramische Filtermaterialien sind üblicherweise aus miteinander versinterten Partikeln aufgebaut, deren Zwischenräume die Porosität bilden. Für Filtrationszwecke ist es erforderlich, einen möglichst hohen Anteil an Porenvolumen und eine möglichst gleichmäßig und eng verteilte Porengrößenverteilung zu erhalten. Daher werden zur Herstellung keramischer Filtermaterialien vorzugsweise keramischer Pulver mit eng verteilter Korngrößenverteilung verwendet, da diese die besten der o.g. Eigenschaften bieten. Pulver mit eng verteilter Korngrößenverteilung sind z.B. aus der Schleifmittelindustrie bekannt und genormt.

Üblicherweise bestehen keramische Membranen aus einem Mehrschichtensystem aus poröser Keramik, dessen einzelne Schichten unterschiedliche Porenweiten aufweisen. Die eigentlich filtrierende Schicht (Layer) ist die dünnste und feinporöseste des Systems. Sie befindet sich auf einer grobporösen und dickeren Schicht, diese wiederum auf der nächsten Schicht usw. Das grobporöse Material bildet den Support, der gleichzeitig die mechanische Trägerfunktion des Gesamtsystems übernimmt und häufig auch die Filtratsammelstrukturen bildet. Die Zwischenschichten zwischen Support und Layer dienen zur Verringerung der Zwischenräume zwischen den groben Partikeln des Supportes und der Abstützung der feineren Partikel der nächstfolgenden Schicht. Je nach gewünschter Trenngrenze werden gegenwärtig für Mikrofiltrationsmembranen (Trenngrenze 1000 nm bis 200 nm) mindestens 1 Schicht, zumeist aber 2 Schichten, für Ultrafiltrationsmembranen (Trenngrenze 100 nm bis 10 nm) mindestens 2, meist aber mehr als 3, für Nanofiltrationsmembranen (Trenngrenzen kleiner 10 nm) mehr als 3 Schichten auf den Support aufgebracht.

Die Herstellung der o.g. keramischen Membranen erfolgt, indem zuerst der Support geformt, getrocknet und gebrannt wird, danach die erste Schicht aufgebracht, diese getrocknet und gebrannt wird, danach die nächste Schicht aufgebracht wird usw. bis der Layer aus den feinsten Partikeln aufgebracht, die gebildete Schicht getrocknet und gebrannt wird. Die Sinterung erfolgt je nach Feinheit der Beschichtung bei sehr viel niedrigeren Temperaturen als beim Support.

Durch die mehrfache Wiederholung des Zykiusses "Beschichten-Trocknen-Sintern" entstehen die Hauptkostenanteile bei der Herstellung. Die thermischen Behandlungsschritte sind innerhalb der Verfahrenskette schon an sich am aufwendigsten, so dass eine mehrfache Wiederholung diesen Anteil immens steigert. Zusammen mit den anderen Schritten entsteht zusätzlich ein kostenintensiver manueller Aufwand.

Gemeinsames Sintern von keramischen Schichten aus unterschiedlichen Keramiken ist an sich schon länger bekannt aus der Fertigung von keramische Multilagenelementen für Anwendungen in der Mikroelektronik. Dafür wurde der Begriff LTCC "Low Temperature Cofiring Ceramics" geprägt.
Allerdings werden hier Schichten unterschiedlicher Keramik, die unterschiedliche Eigenschaften aufweisen (z.B. isolierend und leitfähig) miteinander gesintert, mit dem Ziel, eine möglichst hohe Dichte der Schichten zu erreichen (z.B. US 3978248, US 5683528).

Dagegen sollen bei keramischen Filterelementen möglichst gleiche Keramikschichten, die sich nur in ihren Porengrößen unterscheiden, gemeinsam gesintert werden. Nach dem o.g. Prinzip der Herstellung poröser Keramik bedeutet dies, daß Schichten aus gleicher Keramik, aber mit unterschiedlicher Kornfeinheit, gemeinsam gesintert werden müssen.

Hauptproblem beim Cofiring ist die verschiedene Sinteraktivität unterschiedlich feiner Pulver infolge unterschiedlicher Volumen/Oberfläche-Relationen. Dadurch erfordern grobe Pulver sehr hohe Temperaturen für eine stabile Korn-Korn-Verbindung, weiche durch Oberflächendiffusion oder durch Verdampfungs/Kondensationsmechanismen entsteht.
Bei sehr feineren Pulvern ist die Sinteraktivität dagegen so hoch, dass bei gleichhohen Temperaturen infolge von Volumendiffusion eine starke Verdichtung stattfindet, die von einem Kornwachstum begleitet wird. Dabei verringert sich das Porenvolumen und die Porengrößenverteilung verschiebt sich in Richtung größerer Poren. Dieser Prozeß ist mit einer hohen Volumenschwindung verbunden, während die Korn-Korn-Bindung bei groben Pulvern mit niedrigerer Schwindung abläuft.

Aber selbst geringe Unterschiede in der Schwindung von Mehrschichtelementen beim simultanen Sintern führen zum Verzug des Mehrschichtelements oder zu inneren Spannungen, die die mechanische Belastbarkeit herabsetzen. Weiterhin ist die Schwindung selbst unerwünscht, da sie zu Veränderungen der Abmaße der keramischen Formteile führt, die schwierig reproduzierbar sind und aufwendige Nachbearbeitungsschritte erforderlich machen, um enge Abmessungstoleranzen einhalten zu können.

Nach der WO 96/30207 ist ein Verfahren bekannt, bei dem die Schwindungsanpassung einer Komponente eines Mehrschichtsystems dadurch erreicht wird, daß nanoskalige Pulver verwendet werden. Bei grobporigen Filtern werden grobe Pulver eingesetzt und das nanoskalige Pulver zugemischt, um dessen Versinterung zu fördern, während bei feinen Pulvern das nanoskalige Pulver selbst eingesetzt wird und Sinterinhibitoren zugesetzt werden, um eine zu starke Versinterung zu verhindern. Als grobes Pulver werden auch Agglomerate des nanoskaligen Pulvers eingesetzt.

Von Nachteil bei diesem Verfahren ist, daß die genaue Abstimmung der Schwindung der einzelnen Komponenten jedoch relativ aufwendige Experimente erfordert, die Verarbeitung der nanoskaligen Pulver sehr aufwendig (z.B. bei der Dispergierung) ist und die Pulver sehr teuer sind. Weiterhin verursacht die Mischung von Pulvern unterschiedlicher Feinheit die Verringerung des Porenvolumens, was für Filteranwendungen unerwünscht ist.
Die in den Ausführungsbeispielen genannten Varianten für Mehrlagenfilter nennen Schwindungen von 5% für den Support und 4% für den Layer, was in der praktischen Anwendung zu großen Problemen führt.

Nach der WO 90/15661 ist ein simultan gesinterter Zweischicht-Filter bekannt, bei dem das Sinterverhalten des Supports (dort als "Membran" benannt) an das Sinterverhalten des Layers (dort als "Film" benannt) angepaßt wird, indem zum Grobpulver eine Feinpulverfraktion zugegeben wird (4 nm bis 10% des Durchmessers der groben Partikel) und/oder ein Sinterhilfsmittel eingesetzt wird, um die Sintertemperatur des Supports an die des Layers anzupassen.
Hierbei tritt aber ebenfalls das Problem auf, daß durch die Zugabe der Feinpulverfraktion das Porenvolumen des Supports verringert wird und die Abstimmung der Schwindung des Layers auf die des Supports aufwendige Experimente erfordert. Die Schwierigkeit des Verfahrens wird dadurch deutlich, daß die Schwindung des Filmes zusätzlich durch eine hohe Feststoffbeladung der Pulverdispersion verringert werden soll, was insbesondere bei feinen Pulvern schwierig zu erreichen ist. Weiterhin wird die Sinterung unter Druckbelastung durchgeführt, um einen Verzug zu verhindern. In den Ausführungsbeispielen genannte Schwindungen des Gesamtsystems liegen zwischen 4 und 11%.

Insgesamt sind zwei prinzipielle Probleme erkennbar, die bei der gemeinsamen Sinterung von Schichten unterschiedlicher Kornfeinheit bei gleicher (niedriger oder hoher) Temperatur auftreten:
a) die unterschiedliche Bindungsfestigkeit der Pulverpartikel, d.h. bei hoher Temperatur gute Bindung des Supports, aber starke Versinterung des Layers; bei niedriger Temperatur gute Ausbildung des Layers aber schlechte Bindung des Supports (als Konsequenz wird zwecks Vermeidung dieser Probleme bei gegenwärtigen Techniken jeder Layertyp bei unterschiedlichen Temperaturen gebrannt, die bis zu 1200 K differieren.).
b) die unterschiedliche Schwindung, die zu Rißbildung und Delaminationen der Schicht führt.

Problem b) führt dazu, dass sehr spezielle Anforderungen an den Schichtaufbau gestellt werden, um Risse und Delaminationen zu vermeiden. So wird bei R.R.Bhave, Characteristics and Application, Van Nostrand Reinhold, New York, 1991 genannt, daß
- die Schichten sehr dünn sein müssen (MF-Membranen zwischen 25 und 50 µm, UF unter 10 z.T. unter 5 µm),
- die Rauhigkeit des Supportes gering sein sollte,
- der Kornform des Beschichtungspulvers Bedeutung zukommt.

Der Erfindung liegt die Aufgabe zugrunde, keramische Mehrschichtfilter anzugeben, die trotz unterschiedlicher Partikelgröße der Pulver in den einzelnen Schichten simultan gesintert werden können, und die dadurch kostengünstiger herstellbar sind.

Die erfindungsgemäßen keramischen Mehrschichtfilter werden erfindungsgemäß hergestellt, indem Sintertemperatur und Stoffsystem so gewählt werden, dass die verwendeten Pulver passiv bleiben, d.h. dass sich ihre Größe, Morphologie und Zusammensetzung/Kristallstruktur nicht oder nur geringfügig ändern. Die Bindung der Partikel erfolgt während der Sinterung durch eine zusätzliche Flüssigphase, die die Pulverteilchen umhüllt und an den Kontaktflächen verbindet. Diese Flüssigphase muß so auf die Sintertemperatur und das Stoffsystem abgestimmt sein, dass
- die Flüssigphase bei der gewählten Sintertemperatur eine niedrige Viskosität besitzt und eine gute Benetzung des Pulvers erfolgt,
- die Flüssigphase keine oder nur geringe Reaktionen mit dem Pulver eingeht,
- die Flüssigphase selbst eine erhöhte Oberflächenspannung besitzt, um ein Aufsaugen in das Kapillarsystem der Poren zu vermeiden.

Von besonderem Vorteil bei der erfindungsgemäßen Lösung ist, dass bei der Herstellung der Mehrschichtfilter keine oder nur eine sehr geringe Schwindung, im wesentlichen ≤ 1 %, für den gesamten Schichtverbund auftritt und auch keine oder nur sehr geringe Unterschiede in der Schwindung der einzelnen Schichten auftreten.

Weiterhin tritt bei der erfindungsgemäßen Lösung durch die Anpassung der Schwindungen der unterschiedlichen Schichten Porenmenge und Porengröße zwischen den Partikeln durch das Material eine geringe oder teilweise, aber nicht mehr als um 50 % betragende Verringerung des Porenvolumens auf, wie es nach dem Stand der Technik bei allen bekannten Verfahren durch die dort gewählte Verfahrensführung zwangsläufig erfolgt. Damit ist insbesondere die Herstellung von Filtern durch das erfindungsgemäße Verfahren vorteilhaft.

Vorteilhaft ist besonders bei hoher Feinheit der Partikel eine homogene Verteilung der Flüssigphase während der Aufbereitung und eine homogenere Abscheidung während der Trocknung, möglichst auf der Oberfläche der Partikel. Für sehr feine Pulver sind hier thermische oder chemische Methoden der Oberflächenbeschichtung von Pulvern (eventuell Cofällung usw.) möglich.

Vorteilhaft ist, wenn als keramisches Pulver Siliciumcarbidpulver und als während der Sinterung auftretende Flüssigphase ein Borosilikatglas gewählt wird.
Vorteilhaft ist auch, wenn als keramisches Pulver Aluminiumoxidpulver und als während der Sinterung auftretende Flüssigphase ein Aluminoborosilikatglas oder ein Lithiumaluminosilikatglas gewählt wird.
Vorteilhaft ist es auch, wenn die während der Sinterung auftretende Flüssigphase bei der Abkühlung teilweise oder vollständig kristallisiert.
Vorteilhafterweise werden als keramische Pulver kommerzielle, eng fraktionierte Schleifmittelpulver benutzt.
Vorteilhafterweise wird die Sinterung unter Luft durchgeführt und vorteilhafterweise bei Temperaturen zwischen 700 und 1200 °C.

Die Erfindung wird nachfolgend an mehreren Ausführungsbeispielen näher erläutert.

### Beispiel 1

900 g eines Siliciumcarbidschleifpulvers F500 (mittlere Partikelgröße 30 µm) wird mit 100 g eines feingemahlenen Borosilikatglases (mittlere Partikelgröße 2 µm) gemischt, die Mischung mit üblichen Hilfsmitteln (PVA, PEG) zu einem Foliengießschlicker verarbeitet und aus diesem auf einer Foliengießbank zu einer ein zweiter Foliengießschlicker aufgebracht, der aus 90 g eines Siliciumcarbidschleifpulvers F1000 (mittlere Partikelgröße 4,5 µm) mit 10 g des Borosilikatglaspulver und den üblichen Hilfsmitteln hergestellt worden ist, so dass eine zweite, 50 µm dicke Folie auf der ersten Folie entsteht. Die entstandene Zweischicht-Folie wird mit den üblichen Methoden getrocknet, auf Stücke von 100 x 100 mm vereinzelt und entbindert und danach bei 800 °C 90 min unter Luft gesintert. Es entsteht eine gesinterte zweischichtige keramische Flachmembran, bei der beide Schichten ein offenes Porenvolumen von 35 bis 40 % aufweisen, die dicke, grobporöse Schicht einen mittleren Porendurchmesser von 8 µm und die dünne, feinporöse Schicht eine mittleren Porendurchmesser von 1 µm aufweist. Die Schwindung der Zweischicht-Folie ist kleiner als 0,1 % und die gesinterte Zweischicht-Folie ist völlig eben.

### Beispiel 2

850 g eines Aluminiumoxidpulvers mit mittlerer Korngröße von 50 µm wird mit 150 g eines feingemahlenen Lithiumaluminosilikatglaspulvers (mittlere Korngröße 3 µm) gemischt, die Mischung mit üblichen Hilfsmitteln (PVA/PEG) zu einem Foliengießschlicker verarbeitet und aus diesem auf einer Foliengießbank zu einer keramischen Folie mit Dicke 600 µm verarbeitet. Auf der angetrockneten Folie wird ein zweiter Foliengießschlicker aufgebracht, der aus Aluminiumoxidpulver mit mittlerer Korngröße von 5 µm und 15 g des o.g. Lithiumaluminosilikatglaspulvers, das auf eine mittlere Korngröße von etwa 1 µm gemahlen wurde, und den üblichen Hilfsmitteln hergestellt wird; so daß eine zweite, 50 µm dicke Folie auf der ersten Folien entsteht. Die entstehende Zweischicht-Folie wird mit den üblichen Methoden getrocknet, auf Stücke von 100x100 mm vereinzelt und entbindert und danach bei 950 °C 60 min unter Luft gesintert. Es entsteht eine gesinterte zweischichtige keramische Flachmembran, bei der beide Schichten ein offenes Porenvolumen von 35 bis 40 % aufweisen, die dicke, grobporöse Schicht einen mittleren Porendurchmesser von 10 µm und die dünne, feinporöse Schicht einen mittleren Porendurchmesser von etwa 1µm aufweist. Die Schwindung der Zweischicht-Folie ist < 0,1%; die gesinterte Folie ist völlig eben.

## Patentansprüche

1. Keramischer Mehrschichtfilter aus mindestens zwei Schichten aus gleichen oder unterschiedlichen keramischen Materialien mit unterschiedlicher Partikelgröße der Keramikpartikel in den einzelnen Schichten, wobei eine Schicht eine Supportschicht ist und mindestens eine weitere Schicht als Layer mit keramischen Materialien geringerer Partikelgröße vorhanden ist, bei dem die Partikeloberflächen aller keramischen Partikel in den Schichten ganz oder teilweise mit mindestens einem Material benetzt sind, welches die Oberfläche der keramischen Partikel gut benetzt und einen gleichen oder annähernd gleichen thermischen Ausdehnungskoeffizienten wie die keramischen Partikel besitzt, und die Partikelgröße, Partikelmorphologie, Partikelzusammensetzung und Kristallstruktur des Mehrschichtfilters gegenüber denen der eingesetzten Pulver nicht oder nur gering verändert ist und bei dem zwischen den Partikeln punktuelle und/oder flächenmäßige Verbindungen ausbildet sind, wobei die Bindung der Partikel während der Sinterung durch eine zusätzliche Flüssigphase, die die Pulverteilchen umhüllt und an den Kontaktflächen verbindet, erfolgt und wobei die Porenmenge und Porengröße zwischen den Partikeln durch das Material nur gering oder nur bis maximal 50 %, verringert ist und keine oder nur eine sehr geringe Schwindung für den gesamten Schichtverbund und auch keine oder nur sehr geringe Unterschiede in der Schwindung der einzelnen Schichten vorliegen.

2. Keramischer Mehrschichtfilter nach Anspruch 1, bei dem bei der Ausbildung von mehr als zwei Schichten als Layer auf dem Support die Partikelgröße der keramischen Materialien in Richtung weg von dem Support abnimmt.

3. Keramischer Mehrschichtfilter nach Anspruch 1, bei dem die keramischen Partikel der Supportschicht und der mindestens einen weiteren Schicht als Layer aus dem gleichen keramischen Material, vorzugsweise aus Siliciumcarbid oder Aluminiumoxid besteht.

4. Keramischer Mehrschichtfilter nach Anspruch 1, bei dem das keramische Material in allen Schichten des Filters und das Material, welches die Oberflächen der keramischen Partikel benetzt, in allen Schichten des Filters die gleiche Zusammensetzung aufweisen.

5. Keramischer Mehrschichtfilter nach Anspruch 1, bei dem das Material, welches die Oberfläche der keramischen Partikel benetzt und punktuelle und/oder flächenmäßige Verbindung zwischen den keramischen Partikeln ausbildet, ein Borosilikatglas oder ein Aluminoborosilikatglas oder ein Lithiumaluminosilikatglas ist.

6. Keramischer Mehrschichtfilter nach Anspruch 1, bei dem die Menge an Material, welches die Oberfläche der keramischen Partikel benetzt und punktuelle und/oder flächenmäßige Verbindung zwischen den keramischen Partikeln ausbildet, nur so groß gewählt ist, daß die Porenmenge und Porengröße zwischen den Partikeln durch das Material nur gering, vorteilhafterweise nicht um mehr als 10 % verringert ist.

7. Keramischer Mehrschichtfilter nach Anspruch 1, bei dem die keramischen Partikel von mindestens zwei Schichten sich im Verhältnis 1 : 5 bis 1 : 10 in ihrer mittleren Partikelgröße unterscheiden.

8. Keramischer Mehrschichtfilter nach Anspruch 1, bei dem die Partikel der Supportschicht eine mittlere Partikelgröße von 20 bis 50 µm aufweisen.

9. Verfahren zur Herstellung eines keramischen Mehrschichtfilters nach einem der Ansprüche 1 bis 8, bei dem aus mindestens zwei keramischen Pulvern gleicher oder unterschiedlicher Zusammensetzung aber unterschiedlicher Partikelgröße unter Zusatz von bekannten Formgebungs- und Sinterhilfsmitteln mindestens zwei keramische Schlicker hergestellt werden, wobei die Partikel der keramischen Pulver mit einem Material benetzt sind oder ein Material in Pulverform den keramischen Schlickern zugegeben wird, welches unter Temperaturerhöhung die Oberfläche der keramischen Partikel gut benetzt und einen gleichen oder annähernd gleichen thermischen Ausdehnungskoeffizienten wie die keramischen Partikel besitzt, und welches die Partikelgröße, Partikelmorphologie, Partikelzusammensetzung und Kristallstruktur des Mehrschichtfilters gegenüber denen der eingesetzten Pulver nicht oder nur gering verändert und welches bei Temperaturerhöhung zwischen den Partikeln punktuelle und/oder flächenmäßige Verbindungen ausbildet, wobei das Material in der Menge zugegeben wird oder in der Menge die keramischen Partikel damit beschichtet sind, dass die Porenmenge und Porengröße zwischen den Partikeln durch das Material nur gering oder nur bis maximal 50 %, verringert wird, aus den Schlickern eine oder mehrere Schichten geformt und getrocknet werden, wobei nach dem teilweisen oder vollständigen Trocknen einer Schicht eine weitere Schicht, mit keramischen Partikeln geringerer Partikelgröße als der bereits getrockneten Schicht, darauf geformt werden kann, und mindestens zwei Schichten übereinander gelegt und/oder miteinander verbunden und gemeinsam einer Temperaturerhöhung unterzogen werden, die zur Ausbildung der punktuellen und/oder flächenmäßigen Verbindung zwischen den keramischen Partikeln durch das Material führt, wobei keine oder nur eine sehr geringe Schwindung des gesamten Schichtverbundes und auch keine oder nur eine sehr geringe Unterschiede in der Schwindung der einzelnen Schichten erreicht wird.

10. Verfahren nach Anspruch 9, bei dem ein Material eingesetzt wird, welches während der Temperaturerhöhung eine Flüssigphase bildet.

11. Verfahren nach Anspruch 9, bei dem ein Material eingesetzt wird, dessen Flüssigphase eine hohe Oberflächenspannung aufweist.

12. Verfahren nach Anspruch 9, bei dem ein Material eingesetzt wird, dessen Flüssigphase bei Abkühlung teilweise oder vollständig kristallisiert.

13. Verfahren nach Anspruch 9, bei dem bei Zugabe des pulverförmigen Materials zu den keramischen Schlickern dieses homogen in dem keramischen Schlicker verteilt wird und nach dem Trocknen homogen auf der Oberfläche der keramischen Partikel verteilt ist.

14. Verfahren nach Anspruch 9, bei dem die keramischen Partikel vor der Herstellung der keramischen Schlicker mit dem Material benetzt werden.

15. Verfahren nach Anspruch 14, bei dem die keramischen Partikel mittels chemischer Methoden, vorteilhafterweise durch Cofällung, mit dem Material benetzt werden.

16. Verfahren nach Anspruch 9, bei dem die Temperaturerhöhung unter Luft durchgeführt wird.

17. Verfahren nach Anspruch 9, bei dem die Temperatur auf einen Bereich zwischen 700 °C und 1200 °C erhöht wird.

18. Verfahren nach Anspruch 9, bei dem die eingesetzten keramischen Pulver eng fraktionierte Schleifmittelpulver sind.

## Claims

1. Ceramic multi-layer filter made of at least two layers of the same or different ceramic materials with a different particle size of the ceramic particles in the individual layers, where one layer is a support layer and at least one other layer is present as a layer with ceramic material with a smaller particle size, in which the particle surfaces of all ceramic particles in the layers are moistened entirely or partially with at least one material, which moistens the surface of the ceramic particles well and has the same or approximately the same thermal coefficient of expansion as the ceramic particles, and the particle size, particle morphology, particle composition and crystal structure of the multi-layer filter is not altered or only slightly altered vis-a-vis those of the powder that is used and in which spot and/or surface connections are formed between the particles, where the bonding of the particles takes place during the sintering via an additional liquid phase, which encases the powder particles and connects them on the contact surface, and where the pore quantity and pore size between the particles is reduced by the material only slightly or only partially but not by more than 50 % and no or only a very low shrinkage occurs for the entire layer compound and also no or only very slight differences occur in the shrinkage of the indiviual layers.

2. Ceramic multi-layer filter according to claim 1, in which, when forming more than two layers as layers on the support, the particle size of the ceramic material diminishes in the direction going away from the support.

3. Ceramic multi-layer filter according to claim 1, in which the ceramic particles of the support layer and at least the one additional layer are comprised of layers of the same ceramic material, preferably silicon carbide or aluminium oxide.

4. Ceramic multi-layer filter according to claim 1, in which the ceramic material in all layers of the filter and the material which moistens the surfaces of the ceramic particles, possess the same composition in all layers of the filter.

5. Ceramic multi-layer filter according to claim 1, in which the material that moistens the surface of the ceramic particles and forms the spot and/or surface connection between the ceramic particles is a borosilicate glass or an aluminium borosilicate glass or an lithium aluminium silicate glass.

6. Ceramic multi-layer filter according to claim 1, in which the quantity of material, which moistens the surface of the ceramic particles and forms the spot and/or surface connection between the ceramic particles, is selected in terms of size in such a way that the pore quantity and the pore size between the particles is reduced only slightly by the material, perferably not more than 10 %.

7. Ceramic multi-layer filter according to claim 1, in which the ceramic particles of at least two layers differentiate from one another in a ratio of 1 : 5 to 1 : 10 in terms of their average particle size.

8. Ceramic multi-layer filter according to claim 1, in which the particles of the support layer have an average particle size of 20 to 50 µm.

9. Process for producing a ceramic multi-layer filter according to claim 1 through 8, in which at least two ceramic slurries are manufactured from at least two ceramic powders of the same or different composition but different particle sizes with the addition of known forming and sintering auxiliary agents, where the particles of the ceramic powders are moistened with a material or a material is added to the ceramic slurries in powdered form, which moistens the surface of the ceramic particles well with a temperature increase and has the same or approximately the same thermal coefficient of expansion as the ceramic particles, and which does not or only slightly alters the particle size, particle morphology, particle composition and crystal structure of the multi-layer filter vis-a-vis those of the powder that is used and which forms spot and/or surface connections in the case of a temperature increase between the particles, where the material is only added in the quantity or in the quantity that coats the ceramic particles so that the pore quantity and pore size between the particles is reduced by the material only slightly or only partially but not more than 50 %, one or more layers are formed and dried from the slurries, where, after partial or complete drying of one layer, another layer with ceramic particles with a smaller particle size than the already dried layer can be formed on it, and at least two layers are placed over one another and/or connected with one another and jointly subjected to a temperature increase, which leads to the formation of the spot and/or surface connection between the ceramic particles by the material, and no or only a very low shrinkage occurs for the entire layer compound and also no or only very slight differences occur in the shrinkage of the individual layers.

10. Process according to claim 9, in which a material is used that forms a liquid phase during the temperature increase.

11. Process according to claim 9, in which a material is used whose liquid phase has a high surface tension.

12. Process according to claim 9, in which a material is used whose liquid phase partially or completely crystallizes during cooling.

13. Process according to claim 9, in which, when adding pulverized material to the ceramic slurries, it is distributed homogeneously in the ceramic slurry and, after drying, is distributed homogeneously on the surface of the ceramic particles.

14. Process according to claim 9, in which the ceramic particles are moistened with the material before manufacturing the ceramic slurry.

15. Process according to claim 14, in which the ceramic particles are moistened with the material by means of chemical methods, preferably by co-precipitation.

16. Process according to claim 9, in which the temperature increase is carried out under air.

17. Process according to claim 9, in which the temperature is increased to a range between 700 °C and 1200 °C.

18. Process according to claim 9, in which the ceramic powders used are closely fractionated abrasive powders.

## Revendications

1. Filtre multicouches en céramique, constitué d'au moins deux couches de matériaux céramiques identiques ou différents en particules de céramique de tailles différentes dans les couches individuelles, une couche étant une couche de support et au moins une autre couche en matériaux céramiques en particules de plus petite taille étant prévue, la surface de toutes les particules des couches étant revêtue totalement ou partiellement par au moins un matériau qui mouille bien la surface des particules de céramique et qui possède des coefficients de dilatation thermique identiques ou sensiblement identiques à celui des particules de céramique, la taille des particules, la morphologie des particules, la composition des particules et la structure cristalline du filtre multicouches n'étant pas différentes ou étant peu différentes de celles de la poudre utilisée, des liaisons ponctuelles et/ou de surface étant formées entre les particules, la liaison entre les particules s'effectuant pendant le frittage par l'intermédiaire d'une phase liquide supplémentaire qui englobe des particules de poudre et les relie par les surfaces de contact, la quantité et la taille des pores entre les particules n'étant réduites que peu ou d'au plus 50 %, aucun retrait ou uniquement un retrait très faible n'ayant lieu dans l'ensemble des couches de liaison et aucune différence ou uniquement de très faibles différences n'ayant lieu dans le retrait des couches individuelles.

2. Filtre multicouches en céramique selon la revendication 1, dans lequel, lorsque plus de deux couches sont formées en tant que couche sur le support, la taille des particules de matériaux céramiques diminue lorsque l'on s'éloigne du support.

3. Filtre multicouches en céramique selon la revendication 1, dans lequel les particules de céramique de la couche du support et de la et/ou des autres couches sont constituées en tant que couche du même matériau céramique et de préférence de carbure de silicium ou d'oxyde d'aluminium.

4. Filtre multicouches en céramique selon la revendication 1, dans lequel le matériau céramique de toutes les couches du filtre et le matériau qui revêt la surface des particules de céramique présentent la même composition dans toutes les couches du filtre.

5. Filtre multicouches en céramique selon la revendication 1, dans lequel le matériau qui revêt la surface des particules de céramique et qui forme des liaisons ponctuelles et/ou de surface entre les particules de céramique est un verre au borosilicate, un verre à l'aluminoborosilicate ou un verre au lithioaluminosilicate.

6. Filtre multicouches en céramique selon la revendication 1, dans lequel la quantité du matériau qui revêt la surface des particules de céramique et qui forme des liaisons ponctuelles et/ou de surface entre les particules de céramique est sélectionnée pour être juste assez grande pour que la quantité des pores et la taille des pores formés entre les particules par le matériau ne soient que peu diminuées et ne soient avantageusement pas diminuées de plus de 10 %.

7. Filtre multicouches en céramique selon la revendication 1, dans lequel les tailles moyennes des particules de céramique d'au moins deux couches diffèrent dans le rapport de 1:5 à 1:10.

8. Filtre multicouches en céramique selon la revendication 1, dans lequel les particules de la couche de support ont une taille moyenne de 20 à 50 µm.

9. Procédé de fabrication d'un filtre multicouches en céramique selon l'une des revendications 1 à 8, dans lequel au moins deux boues de céramique sont préparées à partir d'au moins deux poudres de céramique de même composition ou de compositions différentes mais en particules de tailles différentes, avec addition d'agents auxiliaires connus de façonnage et de frittage, les particules de poudre céramique étant revêtues d'un matériau ou un matériau en poudre étant ajouté aux boues de céramique, ce matériau mouillant bien la surface des particules de céramique lorsque la température augmente et possédant un coefficient de dilatation thermique identique ou sensiblement identique à celui des particules de céramique, ne modifiant pas ou ne modifiant que peu la taille des particules, la morphologie des particules, la composition des particules et la structure cristalline du filtre multicouches par rapport à celles de la poudre utilisée et formant lors d'une augmentation de la température des liaisons ponctuelles et/ou de surface entre les particules, le matériau étant ajouté en une quantité telle ou les particules de céramique étant revêtues d'une quantité telle que la quantité des pores et la taille des pores formés entre les particules par le matériau n'étant que peu diminuées ou diminuées d'au plus 50 %, une ou plusieurs couches étant formées à partir des boues et étant séchées, tandis qu'après le séchage partiel ou complet d'une couche, une autre couche dont les particules de céramique ont une taille plus petite que celles de la couche déjà séchée peut y être formée et au moins deux couches sont superposées et/ou reliées l'une à l'autre et subissent ensemble une augmentation de température qui entraîne la formation de liaisons ponctuelles et/ou de surface entre les particules de céramique par le matériau, et l'on n'obtient aucun retrait ou uniquement un retrait très faible dans l'ensemble des couches de liaison et aucune différence ou uniquement de très faibles différences dans le retrait des couches individuelles.

10. Procédé selon la revendication 9, dans lequel on utilise un matériau qui forme une phase liquide pendant l'augmentation de température.

11. Procédé selon la revendication 9, dans lequel on utilise un matériau dont la phase liquide a une haute tension superficielle.

12. Procédé selon la revendication 9, dans lequel on utilise un matériau dont la phase liquide cristallise partiellement ou complètement lors du refroidissement.

13. Procédé selon la revendication 9, dans lequel lors de l'addition du matériau en poudre aux boues de céramique, ce matériau est réparti de manière homogène dans la boue de céramique et est réparti de manière homogène à la surface des particules de céramique après le séchage.

14. Procédé selon la revendication 9, dans lequel les particules de céramique sont revêtues du matériau avant la préparation de la boue de céramique.

15. Procédé selon la revendication 14, dans lequel les particules de céramique sont revêtues du matériau par des méthodes chimiques, avantageusement par précipitation conjointe.

16. Procédé selon la revendication 9, dans lequel l'augmentation de température est réalisée à l'air.

17. Procédé selon la revendication 9, dans lequel la température est augmentée jusque dans une plage de 700°C à 1200°C.

18. Procédé selon la revendication 9, dans lequel les poudres céramiques utilisées sont des poudres abrasives fractionnées.
